Europäisches Patentamt

**European Patent Office**

Office européen des brevets

(19)

(11) Numéro de publication: **0 006 800**
**B1**

(12) **FASCICULE DE BREVET EUROPEEN**

(45) Date de publication du fascicule du brevet: **05.05.82**

(51) Int. Cl.³: **G 21 C 1/02, F 22 B 1/06**

(21) Numéro de dépôt: **79400398.8**

(22) Date de dépôt: **18.06.79**

(54) **Chaudière nucléaire à neutrons rapides à métal caloporteur.**

(30) Priorité: **23.06.78 FR 7818823**

(43) Date de publication de la demande:
**09.01.80 Bulletin 80/1**

(45) Mention de la délivrance du brevet:
**05.05.82 Bulletin 82/18**

(84) Etats contractants désignés:
**BE DE GB IT**

(56) Documents cités:
**DE - A - 2 535 378**
**FR - A - 2 041 724**
**FR - A - 2 179 840**
**FR - A - 2 220 847**
**FR - A - 2 291 580**
**GB - A - 985 463**

**NUCLEAR ENGINEERING INTERNATIONAL vol. 22, no. 272, juin 1978, pages 43—60 L'article "Construction of the world's first full-scale fast breeder reactor" Page 49, colonne de droite: "Containment system"; paragraphe 4 Design and development of main components figures 8,12.**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Robin, Marcel 25, Avenue de l'Europe F-92310 Sevres (FR)**

(74) Mandataire: **Mongrédien, André et al, c/o Brevatome 25, rue de Ponthieu F-75008 Paris (FR)**

Chaudière nucléaire à neutrons rapides à métal caloporteur

La présente invention a pour objet une chaudière nucléaire refroidie par un métal liquide.

De façon plus précise, la présente invention se rapporte de préférence à une chaudière nucléaire refroidie par un métal liquide du type semi-intégré, telle que celle décrite dans la demande de brevet EP—A—6.802 par le demandeur. Mais elle s'appliquerait aussi avantageusement à une chaudière refroidie par métal liquide du type à boucles dans le cas où le réacteur de cette dernière comporte une cuve primaire logée dans la cuve principale. Un exemple de ce type de réacteur est décrit dans la demande de brevet DE—A—1.564.054 déposé le 15 décembre 1966. Mais dans ce réacteur les cuves sont suspendues, les conduites d'entrée et de sortie de sodium sont coaxiales et l'étanchéité entre la cuve interne et la conduite de sodium chaud est assurée par un soufflet faisant tout le tour de la cuve, ce qui conduit évidemment à de grandes difficultés pour sa réalisation et sa maintenance. Par ailleurs, le haut de la cuve principale n'est isolé du sodium chaud que par du sodium "stagnant" qui prend en fonctionnement une température proche de celle du sodium chaud.

On sait que parmi les réacteurs nucléaires à neutrons rapides il existe deux grandes catégories se distinguant par la structure du circuit de refroidissement parcouru par le métal liquide primaire qui est le plus souvent du sodium liquide. D'une part, on trouve les réacteurs à boucles et, d'autre part, les réacteurs intégrés. Dans le premier type de réacteurs, la cuve du réacteur contient uniquement le coeur avec ses dispositifs de contrôle et de manutention et le métal liquide qui circule à travers le coeur. Les protections neutroniques du coeur, les échangeurs primaires et les pompes assurant la circulation du métal liquide primaire pour le refroidissement du coeur sont disposés à l'extérieur de la cuve du réacteur. On trouve en général un circuit secondaire de métal liquide qui échange de la chaleur d'une part avec le métal liquide primaire radioactif (échangeur primaire) et, d'autre part, avec un circuit d'eau vapeur (échangeur secondaire) qui alimente les turbines de production d'énergie électrique.

Le réacteur à neutrons rapides du type intégré comporte une cuve principale dans laquelle on trouve une cuve primaire qui contient le coeur, la protection neutronique du coeur et ses dispositifs de contrôle et de manutention. La cuve principale contient également les échangeurs primaires et les pompes primaires. En d'autres termes, la totalité du circuit primaire de métal liquide est incluse dans la cuve principale. La cuve primaire a pour but essentiel de séparer le métal liquide chaud qui a traversé la coeur et qui va vers les échangeurs primaires du métal liquide froid qui sort des pompes primaires et qui est réintroduit à l'extrémité inférieure du coeur.

Un réacteur du type à boucle est décrit par exemple dans le brevet GB—A—985.463. Dans cette installation toutefois, il n'y a qu'une seule cuve simple 10 contenant uniquement le coeur du réacteur et le fluide réfrigérant et les deux canalisations de fluide chaud 40 et froid 39 reliant la cuve 10 à l'échangeur 17 sont concentriques, ce qui conduit à des pertes de calories importantes et à des problèmes de dilatation différentielle gênants aux différents régimes de fonctionnement du réacteur.

On connait des réacteurs du type intégrés, tel que celui qui fait l'objet de la demande de brevet DE—A—2.535.378 dans lequel on trouve décrite une installation comportant un coeur 1 contenu dans un réservoir de protection 6 et entouré de deux cuves concentriques 8 et 9. La cuve 8 ou cuve primaire contient le fluide chaud et la cuve 9 ou cuve principale contient le fluide froid ainsi que les pompes primaires 16. Dans cette installation toutefois, les conduites de liaison entre les deux cuves précédentes et l'échangeur primaire extérieur 10 ne sont indiquées que schématiquement, ce qui ne permet pas de savoir comment sont résolus les problèmes très délicats de dilatations différentielles entre ces deux conduites en fonctionnement. De plus, la canalisation 13 qui plonge dans la cuve primaire chaude pour y prélever le réfrigérant chaud passe très au-dessus du niveau 19 du réfrigérant froid; or, pour des raisons d'équilibrage des cuves, il y a intérêt à ce que, leurs moyens de supportage et les deux conduites froide et chaude de liaison avec l'échangeur soient sensiblement situés au même niveau horizontal, ce qui conduit à la nécessité de faire traverser le fluide froid par la canalisation de fluide chaud et à des problèmes d'isolation que a demande de brevet DE—A—2.535.378 n'envisage pas. Enfin, l'installation décrite dans ce brevet néglige complètement le problème délicat du refroidissement des parties de la cuve principale au contact direct du fluide chaud.

La présente invention concerne un type de réacteur à neutrons rapides refroidi par un métal liquide du type à boucles avec cuve primaire ou du type semi-intégré. Selon ces types de réacteurs concernés les échangeurs et les pompes de circulation sont extérieurs à la cuve. Toutefois, la cuve comporte également une cuve primaire et une cuve principale pour assurer une séparation entre le métal liquide chaud et le métal liquide froid et dans le cas du réacteur semi-intégré, la cuve primaire contient non seulement le coeur mais également les protections neutroniques du coeur. Dans ce dernier cas, afin d'accroître la compacité du réacteur et d'en diminuer ainsi très sensiblement le coût de fabrication, on a supprimé le circuit secondaire de sodium ou de métal liquide, c'est-à-dire que les blocs-échangeurs-pompes qui reçoivent le métal liquide circulant dans le coeur échangent directement leur chaleur avec un circuit d'eau-vapeur alimentant les turbines de production d'énergie électrique. Un block-échangeur-pompe permettant une telle suppression a déjà été décrit dans le brevet FR—A—2.379.881 déposé le 4 février 1977 au nom du demandeur pour "Bloc-échangeur-pompe".

De façon encore plus précise, la présente invention concerne dans un tel type de réacteurs nucléaires semi-intégrés le refroidissement de la partie supérieure de la cuve principale et la problème de la traversée des cuves par la conduite de sortie du métal liquide chaud qui a circulé dans le coeur.

En effet, on comprend aisément que du fait qu'il existe un cuve primaire et une cuve principale et que la conduite de sortie du métal liquide chaud débouche à l'intérieur de la cuve primaire, il est nécessaire que cette conduite traverse l'espace annulaire limité par la cuve primaire et la cuve principale. En outre, comme on l'a déjà indiqué, la cuve primaire a pour but de séparer une région dans laquelle on trouve un métal liquide relativement froid d'un métal liquide relativement chaud. On comprend qu'il se pose alors des problèmes de dilatation thermique différentielle, en particulier entre les différentes cuves, dilatation thermique différentielle qui a une influence sur la structure et la reccordement de la ou des conduites de sortie du métal liquide chaud, cette conduite (ou ces conduites) devant être reliée(s) à un échangeur de chaleur entre le métal liquide et de l'eau-vapeur.

Pour résoudre ces problèmes, la présente invention concerne une chaudière nucléaire refroidie par un métal liquide, du genre de celle décrite dans la demande de brevet DE—A—2.535.378 et comprenant:

— un coeur,
— une cuve principale comportant un fond et une paroi latérale;
— une cuve primaire intérieure contenant le métal liquide "chaud", coaxiale à la cuve principale et comportant un sommier apte à supporter et à alimenter le coeur du réacteur et une paroi latérale, les deux parois latérales des deux cuves définissant entre elles un espace annulaire pour le métal liquide "froid";
— un échangeur de chaleur, extérieur aux-dites cuves, apte à réaliser un échange thermique entre ledit métal liquide et un fluide secondaire;
— une première conduite de liaison pour le métal liquide "chaud" entre l'entrée dudit échangeur et l'intérieur de la cuve primaire, ladite première conduite débouchant dans la cuve primaire au-dessus dudit coeur et traversant ledit espace annulaire;
— une deuxième conduite de liaison pour le métal froid entre la sortie dudit échangeur et ledit espace annulaire de façon à ramener ledit métal froid dans le sommier pour le faire circuler à travers le coeur,

caractérisée en ce que:
— la cuve principale comporte des premiers moyens de supportage, ces moyens étant solidaires de la face externe de ladite paroi latérale,
— la cuve primaire intérieure est supportée par des deuxièmes moyens de supportage solidaires respectivement des parois latérales de la cuve principale et de la cuve primaire et disposés au niveau des premiers moyens de supportage,
— des moyens sont prévus pour créer une cloison horizontale à débit prédeterminé dans ledit passage annulaire disposés sensiblement au niveau des premiers moyens de supportage,
— la première conduite traverse le métal liquide contenu dans l'espace annulaire au-dessus de ladite cloison horizontale et comporte, au niveau de sa traversée du métal liquide, des moyens assurant sa libre dilatation et son isolation thermique,
— des moyens sont prévus pour collecter une partie dudit métal liquide froid en dessous du coeur et l'introduire dans ledit espace annulaire au-dessus de ladite cloison horizontale.

Le coeur doit être compris avec ses protections neutroniques, latérales et axiales, ses dispositifs de contrôle et ses moyens de manutention des assemblages.

De préférence ladite cuve primaire est constituée par une virole interne s'étendant sur au moins une partie de la hauteur de la paroi latérale de ladite cuve primaire et une virole externe parallèles entre elles, ménageant entre elles un interstice et par une isolation thermique placée dans ledit interstice, ledit interstice étant relié à sa partie inférieure au collecteur de fuites des pieds d'assemblages situé sous le sommier pour recueillir ledit débit de fuite, la virole externe comportant une pluralité d'orifices régulièrement répartis et débouchant dans l'espace annulaire au-dessus de la cloison horizontale.

De préférence également, la première conduite est constituée par une tuyauterie raccordée d'une part à l'entrée du ou d'un échangeur de chaleur et, d'autre part, à un orifice ménagé dans la cuve principale et par une manchette dont une extrémité est raccordée de façon pratiquement étanche à la cuve primaire et dont l'autre extrémité libre pénétrant dans ladite tuyauterie est entourée d'un joint semi-étanche apte à coopérer avec la face interne de ladite tuyauterie.

De toutes façons, l'invention sera mieux comprise à la lecture de la description qui suit de plusieurs modes de réalisation de l'invention donnés à titre d'exemple non limitatif. La description se réfère aux figures annexées sur lesquelles on a représenté:

— sur la figure 1, une vue générale schématique de l'installation nucléaire montrant la cuve du réacteur semi-intégré ainsi qu'un échangeur de chaleur,

— sur la figure 2, une vue générale montrant la façon dont on réalise l'isolation thermique de la cuve primaire et le refroidissement de la partie supérieure de la cuve principale,

— sur la figure 3, une vue en détail de la figure 2, montrant la façon dont on réalise la traversée des deux cuves par la conduite de sortie du métal liquide chaud,

— sur la figure 3a, une vue de détail de la figure 2, montrant une autre variante de réalisation de la traversée des deux cuves par la conduite de sortie du métal liquide chaud et du raccordement, et

— sur les figures 4 et 5, des coupes respectivement longitudinale et transversale de la conduite de la figure 3 montrant l'isolation thermique de cette conduite dans l'espace limité par la cuve primaire et la cuve principale.

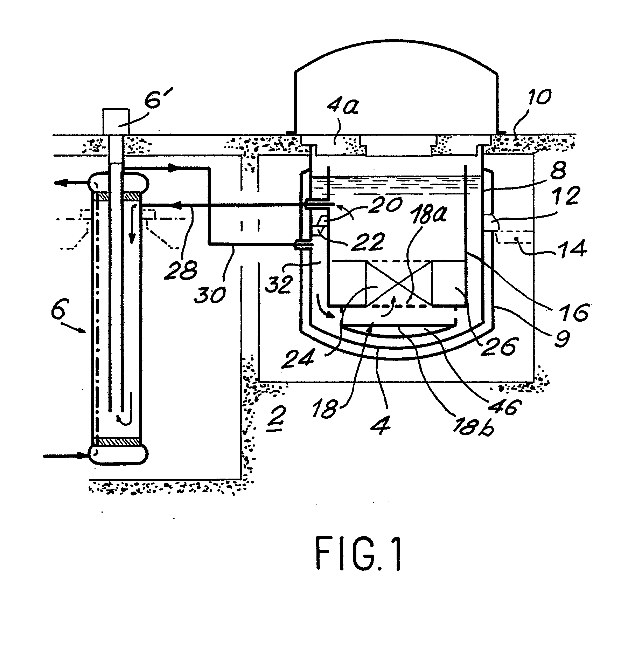

Sur la figure 1, on a représenté de façon schématique les éléments principaux de la chaudière nucléaire. A l'intérieur·d'une structure ou enceinte bétonnée 2, on trouve la cuve principale 4 de la chaudière nucléaire et un échangeur de chaleur 6. Bien entendu, la chaudière nucléaire pourrait comporter plusieurs boucles de refroidissement comportant chacune un échangeur de chaleur 6 associé à la cuve principale 4. Dans l'exemple particulier décrit, l'échangeur de chaleur 6 réalise directement l'échange entre le métal liquide sortant de la cuve principale 4 du réacteur et de l'eau vapeur. Bien entendu, on ne sortirait pas de l'invention si de façon classique l'échangeur de chaleur 6 réalisait un échange entre le sodium, dit dans ce cas primaire, sortant dans la cuve et du sodium secondaire, comme il est usuel dans les réacteurs à boucles. L'invention est notamment applicable à un réacteur de ce dernier type dont la cuve principale contient une cuve primaire séparant le métal liquide chaud du métal liquide refroidi dans les échangeurs intermédiaires. En outre, la pompe 6' de mise en circulation du métal liquide est intégrée à l'échangeur pour accroître la compacité de l'installation en supprimant la conduite de liaison entre ces appareils.

Dans le cas particulier du réacteur semi-intégré la cuve comprend d'une part, une cuve externe dite principale 4 qui est supportée par l'intermédiaire de brides périphériques de supportage telles que 12 en appui sur des éléments de supportage 14 liés à la structure bétonnée 2. La cuve est fermée par une dalle supérieure formant bouchon 4a qui est posée sur le rebord périphérique supérieur de la cuve principale 4. A l'intérieur de la cuve principale 4, on trouve une cuve primaire 16 concentrique à la cuve principale 4 et qui comporte un fond 18, qui porte habituellement le nom de "sommier", ce fond étant constitué d'une plaque perforée supérieure 18a et d'une plaque perforée inférieure 18b. Cette cuve primaire 16 comporte sur sa périphérie des éléments de supportage 20 qui coopérant avec des éléments de supportage 22 solidaires de la face interne de la cuve principale pour constituer une cloison semi-étanche. Il faut noter que les éléments de supportage de la cuve principale et de la cuve primaire sont disposés sensiblement dans un même plan horizontal. A l'intérieur de la cuve primaire 16, on trouve le coeur 24 qui repose sur le fond 18 et les protections latérales neutroniques 26. De plus, la cuve principale 4 peut être entourée par une cuve de sécurité 9 qui double la cuve principale. Cette cuve a pour but de recueillir le sodium en cas de fuite de la cuve principale.

La circulation du métal liquide entre la cuve principale 4 et l'échangeur 6 se fait par l'intermédiaire d'une canalisation de sortie 28 qui relie l'interieur de la cuve primaire 16 à l'entrée de l'échangeur 6 et par une conduite 30 d'introduction du métal liquide refroidi qui relie la sortie du bloc échangeur-pompe avec l'espace annulaire 32 ménagé entre la cuve primaire et la cuve principale. On constate dès à présent que la conduite 28, qui véhicule un métal liquide chaud ayant traversé le coeur, traverse l'espace annulaire 32 contenant du métal liquide plus froid.

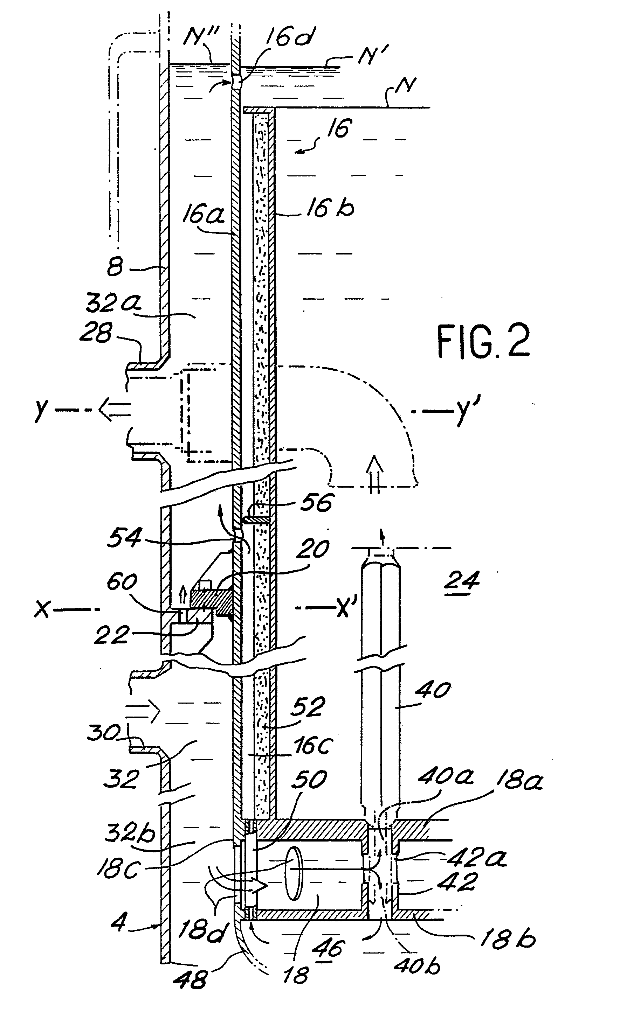

Si l'on se réfère à la figure 2, on voit que, selon ce mode de réalisation, la paroi latérale de la cuve primaire 16 est en fait constituée par une virole externe 16a et par une virole interne 16b ménageant entre elles un interstice 16c. En outre, les plaques perforées inférieure 18b et supérieure 18a sont reliées par une plaque latérale perforée 18c réalisant ainsi entre elles un espace communiquant avec l'espace annulaire 32. Dans les manchons 42 reliant les plaques 18a et 18b sont enfoncés les pieds 40a des assemblages combustibles 40 constituant le coeur 24 du réacteur nucléaire. La paroi latérale 18c est munie d'orifices tels que 18d et les manchons 42 sont munis d'orifices 42a alimentant des orifices correspondants dans les pieds 40a des assemblages combustibles. Il faut noter que les pieds d'assemblages combustibles comportent un orifice inférieur 40b qui débouche dans une zone 46 limitée par la tôle 48 solidaire de la plaque inférieure 18b et constituant le collecteur de fuites.

La circulation principale du métal liquide est la suivante: le métal liquide froid arrive sous la pression de refoulement des pompes (5 à 10 bars) par la conduite 30 et pénètre dans l'espace annulaire 32. Par les orifices 18d, le flux principal de métal liquide entre dans l'espace·délimité par les plaques 18a et 18b et remonte dans les assemblages combustibles 40 où il s'échauffe. Le métal liquide chaude ressort par la ou les conduites 28 vers le ou les échangeurs de chaleur.

Comme on l'a indiqué précédemment, une des caractéristiques essentielles de l'invention réside dans le refroidissement de la partie superieure de la paroi 8 de la cuve principale 4. Pour cela, l'espace annulaire 32 entre la cuve principale et la cuve primaire est partagé en une région supérieure 32a et une région inférieure 32b. Cette séparation est assurée par une cloison horizontale constituée de préférence par coopération des éléments de supportage 20 et 22 de la cuve primaire et de la cuve principale. Ces éléments constituent ainsi une couronne horizontale continue séparant les espaces 32a et 32b munie, comme on l'indiquera ultérieurement, d'orifices calibrés. Le métal liquide froid qui pénètre par la conduite d'entrée 30 occupe la totalité de la partie inférieure 32b de l'espace annulaire. Le refroidissement de la partie supérieure de la cuve primaire est assuré par l'introduction de métal liquide froid dans la partie supérieure 32a de l'espace annulaire 32. Pour cela, on utilise d'abord le débit de fuite d'alimentation des assemblages combustibles qui sort par les orifices 40b des pieds d'assemblage combustible qui est recueilli dans le collecteur de fuites 46.

Dans ce but, l'épaisseur du sommier 18 est traversée par des tubulures 50 disposées à sa périphérie. Par ailleurs, les extrémités inférieures des viroles 16a et 16b sont soudées sur la tôle supérieure 18a du sommier et les tubulures 50 débouchent dans l'interstice 16c. Dans cet insterstice 16c on trouve une couche d'isolation thermique 52 qui peut être une simple tôle ou constituée de rondins en acier bon conducteur de la chaleur qui est fixée sur la virole interne 16b. La virole externe 16a est munie d'orifices calibrés 54 qui débouchent dans la région supérieure 32a de l'espace annulaire 32, c'est-à-dire au-dessus de la cloison horizontale constituée par les éléments de supportage 20 et 22.

En outre, une cloison horizontale 56 en forme de couronne disposée entre les viroles 16a et 16b au-dessus des orifices 54 constitue une barrière limitant les remontées de métal liquide dans l'espace compris entre 16a et 16b et situé au-dessus de la couronne 56. A son extrémité supérieure, la virole externe 16a comporte une série d'orifice 16d faisant communiquer l'espace annulaire 32a avec l'intérieur de la cuve primaire à un niveau qui est légèrement supérieur au niveau normal du métal liquide dans la cuve primaire.

Le fonctionnement de ce circuit de refroidissement de la partie supérieure de la paroi 8 de la cuve principale est le suivant. Le métal liquide froid à moyenne pression contenu dans le collecteur de fuites 46 est prélevé par les tubulures 50 et pénètre ainsi dans l'interstice annulaire 16c d'où il passe dans la région supérieure 32a de l'espace annulaire 32 par les orifices calibrés 54. Le métal liquide froid remplit ainsi la région 32a jusqu'au niveau N'' puis en ressort par les orifices 16d. On réalise ainsi le refroidissement de la partie haute de la cuve principale de façon à ce que sa température ait une valeur inférieure à la limite de fluage de l'acier utilisé qui est voisine de 425°C. Par ailleurs, le déversement au sommet de la cuve permet de créer à la surface N du métal liquide chaud dans la cuve primaire une couche de métal liquide plus "froid" donc à plus faible pression de vapeur, ce qui est favorable puisque cette couche de surface N' sépare ainsi le métal liquide chaud de la couverture en gaz inerte qui est par exemple de l'argon en limitant la concentration de vapeur métallique dans ce gaz ainsi que l'échauffement du bouchon 4a pour rayonnement du métal liquide.

Il faut noter que c'est la virole externe 16a seule qui assure le supportage mécanique du sommier 18, la virole 16b ne servant qu'à la délimitation du sodium chaud et à la fixation de la couche d'isolation thermique 52 ainsi qu'à la canalisation du débit de fuite vers l'espace 32a. Cependant, la couche d'isolation a seulement pour but d'isoler le métal liquide chaud dans la cuve primaire du métal liquide froid dans l'espace 32. Or, dans la cuve primaire on ne retrouve véritablement du métal liquide chaud qu'au-dessus du coeur 24, c'est-à-dire à la sortie supérieure des assemblages combustibles 40.

C'est pourquoi selon une variante non représentée sur la figure, la virole 16b peut être interrompue un peu en dessous de la face supérieure du coeur et l'interstice 16c est fermé à sa partie inférieure par une cloison en forme de couronne semblable à la cloison 56. Dans ce cas, les tubulures 50 sont également prolongées par des conduites qui raccordent les tubulures 50 à l'interstice annulaire 16c ou directement aux orifices 54.

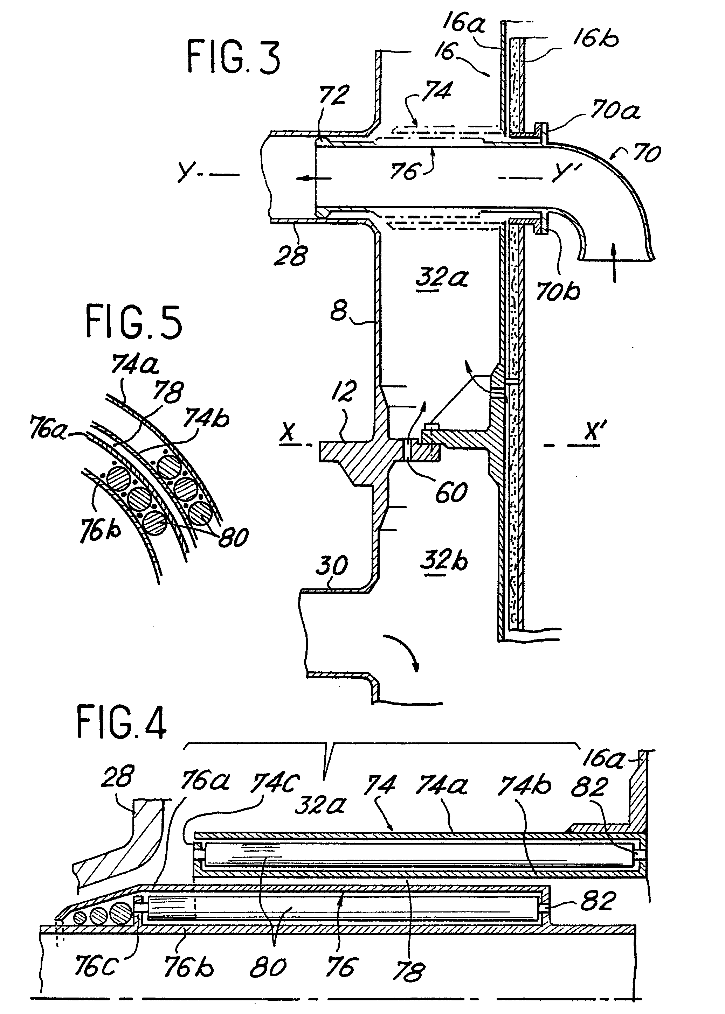

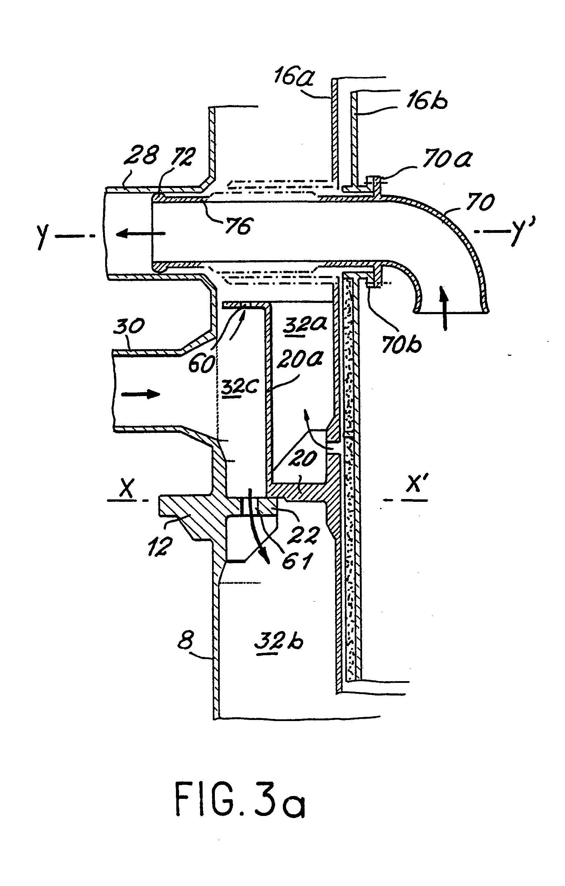

On peut cependant craindre que le débit de fuite des pieds d'assemblage qui est à moyenne pression (par exemple de l'ordre de 20 mètres de hauteur de sodium) ne soit pas suffisant pour assurer le refroidissement de la partie supérieure de la paroi 8 de la cuve principale 4. C'est pourquoi, comme on le voit mieux sur la figure 3, on a prévu des orifices 60 calibrés ou éventuellement réglables par un dispositif de type robinet à pointeau non représenté, dans la cloison horizontale constituée par les éléments de supportage 20 et 22. On réalise ainsi un apport supplémentaire de métal liquide froid du fait que dans la région 32b le métal liquide est sensiblement à la pression de refoulement des pompes. De plus, les orifices 60 jouent le rôle d'évent de gaz lors du remplissage en sodium de la cuve principale.

En se référant aux figures 3 à 5, on va décrire maintenant un exemple de réalisation de la traversée des cuves primaire et principale par la conduite 28 de sortie de métal liquide chaud. On comprend qu'à ce niveau il se pose deux problèmes. D'une part, un problème de dilatation thermique différentielle des cuves primaire et principale et d'autre part, un problème d'isolation de la conduite 28 qui transporte le métal liquide chaud vis-à-vis du métal liquide froid contenu dans l'espace 32a, du moins pour la portion de cette conduite située dans l'espace annulaire 32a.

Pour ce qui est de la dilatation thermique des cuves, il est très important de noter que ce problème est déjà en très grande partie résolu du fait que selon l'invention les éléments de supportage 20 et 22 de la cuve primaire et de la cuve principale sont à un même niveau et que, de surcroît, la distance entre le plan de supportage XX' et l'axe YY' de la conduite est aussi réduite que possible. Ainsi la "longueur" de dilatation de chacune des cuves entre le plan XX' et l'axe YY' est très réduite. Cependant, la différence des températures des cuves peut être sensible. Le métal liquide chaud est à une température voisine de 530°C (cuve primaire) alors que le métal liquide froid est à une température voisine de 350°C (cuve principale).

Comme on le voit sur la figure 3, la tuyauterie de sortie 28 est en fait soudée sur la partie supérieure de la paroi 8 de la cuve principale 4 et la communication entre cette tuyautérie et l'intérieur de la cuve primaire 16 est assurée par une manchette 70 qui traverse l'espace annulaire 32. La manchette 70 est fixée sur la virole 16b par une bride 70a et une contrebride 70b solidaire de la virole 16b. A son extrémité libre, la manchette 70 comporte un joint semi-étanche 72 qui coopère avec la face interne de la tubulure 28. De plus, ce joint a un profil extérieur arrondi pour constituer un système rotulant. De préférence, le joint 72 est constitué par une bague montée avec jeu dans une gorge ménagée dans la face externe de l'extrémité libre de la manchette 70.

On comprend qu'ainsi on peut absorber, sans introduite de contraintes tout en limitant le plus possible les fuites de métal liquide, les effets dus aux dilatations radiales et longitudinales des cuves primaire et principale.

Pour ce qui est de l'isolation thermique de la manchette 70, elle est constituée par deux isolations annulaires mobiles l'une par rapport à l'autre. On trouve d'une part un fourreau 74 externe qui est fixé sur la virole externe 16a et d'autre part, un manchon cylindrique 76 fixé sur la face externe de la manchette. Dans l'espace 78 (figure 4) entre ces deux éléments d'isolation on trouve du métal liquide stagnant. On voit que cette isolation n'est ainsi soumise à aucune contrainte mécanique du fait des dilations des cuves.

De préférence, chaque isolation (figure 4) est constituée par deux tôles cylindriques 74a et 74b (pour le fourreau 74) et 76a et 76b (pour le manchon 76) entre lesquelles sont placés des rondins d'acier 80. Des tôles annulaires 74c et 76c immobilisent les rondins 80. Elles sont percées d'orifices 82 pour éviter tout effet de pression dans les espaces internes que limitent ces tôles. Des trous de vidange non représentés sont également prévus à la partie inférieure des tôles 74a et 76a.

On comprend qu'ainsi on assure une très bonne isolation thermique entre le métal liquide froid dans la région 32a et la métal liquide chaud dans la tubulure 28 et la manchette 70 sans soumettre cette isolation à des contraintes d'origine thermique tout en laissant se produire librement la dilatation des cuves.

L'ensemble des dispositifs décrites ci-dessus, dans le cas de l'exemple considéré, pour assurer d'une part le refroidissement de la cuve principale et d'autre part la sortie du sodium chaud de la cuve primaire peut s'appliquer directement à un réacteur à boucles comportant une cuve primaire de séparation du sodium chaud et du sodium froid.

Sur les figures 1, 2 et 3, la conduite de métal liquide froid 30 a éte représentée soudée à un orifice ménagé dans la cuve principale 4 débouchant dans l'espace annulaire 32 en dessous de la cloison présentant les orifices calibrés assurant un debit prédeterminé. Une variante interessante représentée sur la figure 3a consiste à raccorder la conduite 30 à la cuve principale 4 au voisinage de la surface libre du métal liquide et au-dessus de la cloison 20, 22 présentant les orifices calibrés dans l'espace annulaire 32a ou encore à munir la bride 20 d'un baffle 20a délimitant avec la cuve principale 4 un espace annulaire 32c communiquant, par les gros orifices 61 percés dans la bride 22 avec l'espace annulaire 32b et avec l'espace annulaire 32a par le jeu entre le baffle 20a et la cuve principale 4 (et si nécessaire par des orifices 60 percés dans la bride 20). Cette variante permet de placer les orifices des deux conduites 28 et 30 au-dessus de la bride d'appui 12 de la cuve principale 4, ce qui peut faciliter la réalisation de cette cuve principale 4.

L'intérêt essentiel de cette variante est d'éviter le risque de siphonage du métal liquide entourant la cuve primaire dans le cas d'une fuite importante survenant à la canalisation 30 entre la cuve principale et l'échangeur de chaleur.

**Revendications**

1. Chaudière nucléaire refroidie par un métal liquide comprenant:

— un coeur (24);
— une cuve principale (4) comportant un fond et une paroi latérale (8);
— une cuve primaire intérieure (16) contenant le métal liquide "chaud", coaxiale à la cuve principale et comportant un sommier (18) apte à supporter et à alimenter le coeur du réacteur et une paroi latérales les deux parois latérales des deux cuves définissant entre elles un espace annulaire (32) pour le métal liquide "froid";

— un échangeur de chaleur (6), extérieur auxdites cuves, apte à réaliser un échange thermique entre ledit métal liquide et un fluide secondaire;

— une première conduite de liaison (28) pour le métal liquide "chaud" entre l'entrée dudit échangeur (6) et l'intérieur de la cuve primaire (16), ladite première conduite débouchant dans la cuve primaire au-dessus dudit coeur (24) et traversant ledit espace annulaire (32);

— une deuxième conduite de liaison (30) pour le métal froid entre la sortie dudit échangeur (6) et ledit espace annulaire (32) de façon à ramener ledit métal froid dans le sommier (18) pour le faire circuler á travers le coeur (24), caractérisée en ce que:

— la cuve principale (4) comporte des premiers moyens de supportage (12), ces moyens (12) étant solidaires de la face externe de ladite paroi latérale (8),

— la cuve primaire intérieure (16) est supportée par des deuxièmes moyens de supportage (20, 22) solidaires respectivement des parois latérales de la cuve principale et de la cuve primaire et disposés au niveau des premiers moyens des supportage (12),

— des moyens (20, 22, 60, 61) sont prévus pour créer une cloison horizontale à debit prédéterminé dans ledit passage annulaire (32) disposés sensiblement au niveau des premiers moyens de supportage (12),

— la première conduite (28) traverse le métal liquide contenu dans l'espace annulaire (32) au-dessus de ladite cloison horizontale et comporte, au niveau de sa traversée du métal liquide, des moyens (74, 72, 76) assurant sa libre dilatation et son isolation thermique,

— des moyens (50) sont prévus pour collecter une partie dudit métal liquide froid en dessous du coeur et l'introduire (54, 60) dans ledit espace annulaire au-dessus de ladite cloison horizontale.

2. Chaudière selon la revendication 1 caractérisée en ce que la portion de la première conduite (28) traversant l'espace annulaire (32) est entourée par des moyens d'isolation thermique (74, 76) aptes à supporter la dilatation différentielle entre les deux cuves.

3. Chaudière selon l'une quelconque des revendications 1 et 2, caractérisée en ce que ladite cuve primaire (16) est constituée par une virole interne (16b) s'étendant sur au moins une partie de la hauteur de la paroi latérale de ladite cuve primaire et une virole externe (16a) parallèles entre elles, ménageant entre elles un interstice avec une isolation thermique dans ledit interstice (16c) qui est relié à sa partie inférieure à un collecteur (46) placé sous le sommier (18) et recueillant le débit de fuite du métal liquide appliqué à la base du coeur, et en ce que ladite virole externe (16a) comporte une pluralité d'orifices (54) débouchant dans l'espace annulaire au-dessus de la cloison horizontale (20, 22).

4. Chaudière selon la revendication 3, caractérisée en ce que ladite cloison horizontale est constituée par les deuxièmes moyens de supportage (20, 22) eux-mêmes qui sont munis d'orifices calibrés (6) ou éventuellement à débit réglable.

5. Chaudière selon l'une quelconque des revendications 1 à 4, caractérisée en ce que la première conduite (28) est constituée par une tuyauterie raccordée d'une part à l'entrée de l'échangeur de chaleur (6) et, d'autre part, à un orifice ménagé dans la cuve principale (4) et par une manchette (70) dont une extrémité est raccordée de façon étanche à la cuve primaire (16) et dont l'autre extrémité libre qui pénètre dans ladite tuyauterie est entourée d'un joint semiétanche (72) apte à coopérer avec la face interne de ladite tubulure.

6. Chaudière selon la revendication 5, caractérisée en ce que ladite manchette (70) est entourée par un manchon d'isolation thermique (76) fixé sur celle-ci et en ce qu'un fourreau (74) d'isolation thermique dont une extrémité est solidaire de la paroi (16a) de la cuve primaire entoure ledite manchon (76).

7. Chaudière selon la revendication 5, caractérisée en ce que ledit joint semi-étanche (72) est constitué par une bague logée avec jeu dans une rainure circulaire ménagée dans la face externe de la manchette au voisinage de son extrémité libre, la face de la bague coopérant avec ladite tubulure ayant une forme arrondie pour former une rotule.

8. Chaudière selon l'une quelconque des revendications 1 à 4, caractérisée en ce que la deuxième conduite (30) de retour du métal liquide caloporteur refroidi pénètre dans la cuve principale (4) en dessous de la cloison horizontale (20, 22) partageant l'espace annulaire (32) compris entre la cuve primaire (16) et la cuve principale (4).

9. Chaudière selon l'une quelconque des revendications 1 à 4, caractérisée en ce que la deuxième conduite (30) de retour du métal liquide caloporteur refroidi pénètre dans la cuve principale au-dessus de la cloison horizontale (20, 22) située au voisinage du niveua des premiers moyens de supportage (12) des cuves primaire (16) et principale (4) et débouche dans un espace annulaire (32c) compris entre la cuve principale et les moyens de supportage (20, 22) de la cuve primaire et communiquant à travers ladite cloison horizontale avec l'espace (32b) compris entre les parties inférieures des cuves primaire et principale.

**Patentansprüche**

1. Mittels eine flüssigen Metalls gekühlter Kernreaktor mit einem Reaktorkern (24), einem einen Boden und eine Seitenwand (8) aufweisenden Haupttrog (4), einem das "heiße" flüssige Metall enthaltenden, eine den Reaktorkern tragendes und seine Speisung ermöglichendes Tragwerk (18) sowie eine Seitenwand aufweisenden, inneren Primärtrog (16), welcher koaxial mit dem Haupttrog angeordnit ist, so daß die beiden Seitenwände der beiden Tröge zwischen sich einen ringförmigen Raum (32) für das "kalte" flüssige Metall begrenzen, einem außerhalb der Tröge angeordneten Wärmetauscher (6) für den Wärmeaustausch zwischen dem flüssigen Metall und einem sekundären Strömungsmittel, einer sich zwischen dem Einlaß des Wärmetauschers (6) und dem Innenraum des Primärtrogs (16) erstreckenden ersten Verbindungsleitung (28) für das "heiße" Metall, welche oberhalb des Reaktorkerns (24) im Primärtrog ausmündet und den ringförmigen Raum (32) durchsetzt, und mit einer sich zwischen dem Auslaß des Wärmetauschers (6) und dem ringförmigen Raum (32) erstreckenden zweiten Verbindungsleitung (30) für die Rückführung des kalten Metalls in das Tragwerk (18) zum Durchlauf desselben durch den Reaktorkern (24), dadurch gekennzeichnet, daß der Haupttrog (4) erst Trageinrichtungen (12) aufweist, welche fest an der Außenseite der Seitenwand (8) angebracht sind, daß der innere Primärtrog (16) auf zweiten Trageinrichtungen (20, 22) ruht, welche, in Höhe der ersten Trageinrichtungen (12) fest an den Seitenwänden des Haupttrogs und des Primärtrogs angebracht sind, daß im wesentlichen in Höhe der ersten Trageinrichtungen (12) eine waagerechte Trennwand mit einer vorbestimmten Durchlässigkeit (20, 22, 60, 61) in dem ringförmigen Raum (32) geformt ist, daß die erste Leitung (28) oberhalb der waagerechten Trennwand durch das in dem ringförmigen Raum (32) enthaltene flüssige Metall hindurchgeführt ist und in Höhe ihrer Durchführung durch das flüssige Metall Einrichtungen (74, 72, 76) aufweist, welche ihre freie Dehnung und Wärmeisolierung gewährleisten, und daß Einrichtungen (50) zum Entnehmen eines Teils des kalten flüssigen Metalls unterhalb des Reaktorkerns und zum Einführen (54, 60) desselben in den ringförmigen Raum oberhalb der waagerechten Trennwand vorgesehen sind.

2. Reaktor nach Anspruch 1, dadurch gekennzeichnet, daß das den ringförmigen Raum (32) durchsetzende Teil der ersten Leitung (28) von Wärmeisolierungseinrichtungen (74, 76) umgeben ist, welche eine unterschiedliche Ausdehnung zwischen den beiden Trögen ermöglichen.

3. Reaktor nach einem der Ansprüche 1 und 2, dadurch gekennzeichnet, daß der Primärtrog aus einem sich über wenigstens ein Teil der Höhe der Seitenwand des Primärtrogs erstreckenden inneren Mantelschuß (16b) und einem zu diesem parallelen äußeren Mantelschub (16a) gebildet ist, zwischen welchen ein eine Wärmeisolierung enthaltender Zwischenraum (16c) vorhanden ist, welcher an seinem unteren Teil mit einem unterhalb des Tragwerks (18) angeordneten, den Überschuß des dem Boden des Reaktorkerns zugeführten flüssigen Metalls aufnehmenden Sammler (46) verbunden ist, und daß der äußere Mantelschuß (16a) eine Anzahl von oberhalb der waagerechten Trennwand (20, 22) in dem ringförmigen Raum ausmündenden Öffnungen (54) hat.

4. Reaktor nach Anspruch 3, dadurch gekennzeichnet, daß die waagerechte Trennwand aus den zweiten Trageinrichtungen (20, 22) gebildet ist, welche ihrerseits mit kalibrierten oder gegebenenfalls einen regelbaren Durchlaßquerschnitt aufweisenden Öffnungen (60) versehen sind.

5. Reaktor nach wenigstens einem der Ansprüche 1 bis 4, dadurch gekennzeichnet, daß die erste Leitung (28) zusammengesetzt ist aus einer einerseits am Einlaß des Wärmetauschers (6) und andererseits an einer am Haupttrog (4) gebildeten Öffnung angeschlossenen Verrohrung und einer Manschette (70), deren eines Ende abdichtend am Primärtrog (16) befestigt ist und deren anderes, in die Verrohrung hineinragendes, freies Ende von einer mit der Innenfläche der Verrohrung zusammenwirkenden, teilweise durchlässigen Abdichtung (72) umgeben ist.

6. Reaktor nach Anspruch 5, dadurch gekennzeichnet, daß die Manschette (70) von einem an ihr befestigten Wärmeisolierungsmantel (76) umgeben ist un daß eine mit einem Ende fest an der Wand (16a) des Primärtrogs angebrachte Wärmeisolierungshülse (74) den Mantel (76) umgibt.

7. Reaktor nach Anspruch 5, dadurch gekennzeichnet, daß die teilweise durchlässige Abdichtung (72) aus einem Ring gebildet ist, welcher mit Spiel in einer nahe dem freien Ende der Manschette in der Außenseite derselben geformten Ringnut sitzt, und dessen mit der Verrohrung zusammenwirkende Seite eine ein Gelenk bildende, gerundete Form aufweist.

8. Reaktor nach wenigstens einem der Ansprüche 1 bis 4, dadurch gekennzeichnet, daß die zweite Leitung (30) für die Rüchführung des als Wärmeträger verwendeten, abgekühlten flüssigen Metalls unterhalb der den ringförmigen Raum (32) zwischen dem Primärtrog (16) und dem Haupttrog (4) unterteilenden, waagerechten Trennwand (20, 22) in den Haupttrog (4) eingeführt ist.

9. Reaktor nach wenigstens einem der Ansprüche 1 bis 4, dadurch gekennzeichnet, daß die zweite Leitung (30) für die Rückführung des als Wärmeträger verwendeten, abgekühlten flüssigen Metalls oberhalb der im Bereich der Höhe der ersten Trageinrichtungen (12) des Primär- (16) und des Haupttrogs (4) angeordneten, waagerechten Trennwand (20, 22) in den Haupttrog eingefühurt ist und in einem zwischen dem Haupttrog und den Trageinrichtungen (20, 22) des Primärtrogs gebildeten, ringförmigen Raum (32c) ausmündet, welcher durch die waagerechte Trennwand hindurch mit dem Raum (32b) zwischen den unteren Teilen des Primär- und des Haupttrogs strömungsverbunden ist.

## Claims

1. Liquid metal-cooled fast nuclear reactor
which comprises

— a core (24);
— a main tank (4) having a bottom and a side
wall (8);
— a primary internal tank (16) containing
"hot" liquid metal, coaxial with the main
tank and having a floor member (18)
adapted to support and feed the reactor
core, and a side wall, the two side walls of
the two tanks defining between them an
annular space (32) for "cold" liquid metal;
— a heat exchanger (6) external of the said
tanks, adapted to provide heat exchange
between the said liquid metal and a secondary fluid;
— a first conduit (28) for transfer of "hot"
liquid metal from the interior of the primary
tank (16) to the inlet of the said exchanger
(6), the said first conduit opening into the
primary tank above the said core (24) and
traversing the said annular space (32);
— a second conduit (30) for transfer of "cold"
liquid metal between the output of the said
exchanger (6) and the said annular space
(32) whereby to lead back the said cold
metal into the floor member (18) for circulation through the core;

characterized in that:
— the main tank (4) comprises first support
means (12), said means (12) being unitary
with the external surface of the said side
wall (8);
— the primary internal tank (16) is supported
by two support means (20, 22) respectively
unitary with the side walls of the main tank
and the primary tank, and being level with
the first support means (12);
— means (20, 22, 60, 61) being provided to
constitute a horizontal baffle of predetermined flow rate in the said annular space
(32) disposed substantially at the level of
the first support means (12);
— the first conduit (28) passes through liquid
metal contained in the annular space (32)
above said horizontal baffle and comprises
at the level where it passes through the
liquid metal, means (74, 72, 76) providing
free expansion and thermal insulation; and
— means (50) are provided to collect a part of
the said cold liquid metal below the core,
with means (54, 60) to introduce it into the
said annular space above the said horizontal
baffle.

2. Reactor according to Claim 1 characterized in that the portion of the first conduit (28) passing through the annular space (32) is
surrounded by thermal insulation means (74,
76) adapted to allow differential expansion of
the two tanks.

3. Reactor according to either of Claims 1
and 2 characterised in that the said primary tank
(16) is constituted by an internal shroud (16b)
extending over at least part of the height of the
side wall of the said primary tank, and an
external shroud (16a), said shrouds being
parallel and defining between them an internal
space (16c), with thermal insulation in the said
internal space (16c), which is connected at its
lower part to a collector (46) located under the
floor member (18) and receiving the outlet flow
of liquid metal supplied to the base of the core,
and in that the said external shroud (16a) has a
plurality of orifices (54) opening into the annular
space above the horizontal baffle (20, 22).

4. Reactor according to Claim 3 characterized in that the said horizontal baffle is constituted by the two support means (20, 22),
which are provided with orifices (60) which are
calibrated or optionally are of controllable flow
rate.

5. Reactor according to any one of Claims 1
to 4 characterized in that the first conduit (28)
comprises a pipe connected at one end to the
inlet of the heat exchanger (6) and at the other
end to an orifice formed in the main tank (4),
and through a sleeve (70) one of whose ends is
tightly sealed to the primary tank (16) and
whose other (free) end which lies within the
said pipe is surrounded by a semi-sealed joint
(72) adapted to cooperate with the internal
surface of said pipe.

6. Reactor according to Claim 5 characterized in that the said sleeve (70) is surrounded by
a layer (76) of thermal insulation fixed thereto
and in that a sheath (74) of thermal insulation
one end of which is unitary with the shroud
(16a) surrounds the said insulation layer (76).

7. Reactor according to Claim 5 characterized in that the said semi-sealed joint (72) is
constituted by a ring located with play in a circular groove in the external surface of the sleeve
near its free end, the surface of the ring that
bears on the said pipe having a rounded form to
constitute a swivel.

8. Reactor according to any one of Claims 1
to 4 characterised in that the second conduit
(30) for return of cooled heat-exchanging liquid
metal penetrates into the main tank (4) below
the horizontal baffle (20, 22) dividing the
annular space (32) between the primary tank
(16) and the main tank (4).

9. Reactor according to any one of Claims 1
to 4 characterised in that the second conduit
(30) for return of cooled heat-exchanging liquid
metal penetrates into the main tank above the
horizontal baffle (20, 22) located near the level
of the first support means (12) for the primary
(16) and main (4) tanks, and opens into an
annular space (32c) formed between the main tank and the support means (20, 22) of the primary tank, and communicating through said horizontal baffle with the space (32b) between the lower parts of the main and primary tanks.

FIG.1

FIG.2

FIG. 3

FIG. 5

FIG. 4

FIG.3a